# EUROPEAN PATENT APPLICATION

(11) **EP 2 571 194 A1**
(43) Date of publication of application: **20.03.2013**
(21) Application number: 10851320.1
(22) Date of filing: 14.05.2010
(51) Int. Cl.: H04L 12/24

(54) **METHOD AND SYSTEM FOR MANAGING HIGH CAPACITY TRAFFIC OFFLOAD IN AN IP NETWORK NUCLEUS IN THE TRANSPORT LAYER**

(71) Applicant: Telefónica, S.A., 28013 Madrid (ES)
(72) Inventor: CALLEJO RODRÍGUEZ, María Ángeles, E-28013 Madrid (ES); JIMÉNEZ CHICO, Francisco Javier, E-28013 Madrid (ES)
(74) Representative: Gonzalez-Alberto Rodriguez, Natalia
(86) International application number: PCT/ES2010/070323
(87) International publication number: WO 2011/141585

(57) **Abstract**

Method and system for managing high capacity traffic offload in an IP network nucleus in the transport layer, relates to a method and system for coordinating and automating the processes of IP traffic offload in transport technology, minimizing the operational problems associated with the configuration of IP and transport layers. The system consists of two main components, a transit traffic management module integrated into a network operator and a routing module for generating new links integrated into each of the IP network nodes.

## Description

### Object of the Invention

As expressed in the title of this specification, the present invention relates to a method and system for managing high capacity traffic offload in an IP network nucleus in the transport layer. The field of application of the invention is Internet traffic routing. To that end the system consists of two main components, a transit traffic management module integrated into a network operator and a routing module for generating new links integrated into each of the IP network nodes. As mentioned, the invention further comprises a method which establishes the guidelines for creating new links using the described system.

### Background of the invention

IP link establishment and configuration requires interaction with IP devices (IP nodes and routers) and with transport technologies and devices responsible for providing connectivity between routers as described below:
- Transport capabilities (WDM links, Ethernet links, etc.) must be configured for establishing connectivity between IP nodes.
- The IP nodes must be configured such that routing protocols (generally intra-domain routing protocols) and traffic engineering methods, usually MPLS, are configured according to the operator's policies.

On the other hand, the concept of IP traffic offload is summarized as carrying out a selective rerouting of high capacity traffic from central routers to the transport layer to prevent excessively high levels in the IP/MPLS hierarchy. The practice of IP traffic offload itself has already been implemented by IP network operators, who currently promote the deployment of point-to-point WDM links between a large number of routers of the nucleus. The imminent deployment of reconfigurable photonic networks such as ASON networks (Automatically Switched Optical Network) using GMPLS (Generalized Multi-Protocol Label Switching), provides unprecedented flexibility in this IP nucleus simplification process.

Reconfiguring the transport layer would allow interconnecting IP/MPLS nodes in a completely arbitrary manner. A direct optical connection (also known as an optical bypass) could thus allow interconnecting two nodes by means of a direct virtual link.

The design of a multi-layer network (for example, IP over the reconfigurable WMD network) can be modeled as:
- A client network defining a traffic demand matrix (in this case, the IP/MPLS layer).
- A server layer (in this case, the transport network) providing a reconfigurable virtual network topology (VNT) to the client layer.

Today there is a set of available technologies which could facilitate the dynamic reconfiguration and automation of new virtual network topology configurations:
- The control plane of Generalized Multi-Protocol Label Switching (GMPLS) defines a set of processes that allow creating new routes in transport networks, establishing mechanisms for discovering the reserve resources and topologies. Three different models allowing IP routers to request establishing new links using new transport capabilities are defined:
   - The overlapping model defines a clear separation between the IP layer and the transport layer. The interaction between both layers is carried out as a result of the UNI interface (User to Network Interface).
   - In the joint model, the IP layer and the transport layer share a common control plane for establishing a new route.
   - In the augmented model, only the IP routers having an interface with the transport nodes have a GMPLS control plane. To a certain extent, this model is similar to the overlapping model, but the UNI interface is implemented with the characteristic GMPLS protocols.
- The PCE (Path Computation Element) multi-layer draft provides an architecture which allows calculating multi-layer routes and presents architecture alternatives to implement coordinated multi-layer routing and signaling processes. Current specifications leave implementation details on equipment configuration out of its scope.
- Multi-layer routing algorithms and planning tools with the intention of dynamic network resource optimization have been widely studied in the state of the art, and various commercial or pre-commercial solutions are already available on the market.
- Multi-layer traffic engineering concepts identify the challenges that dynamic multi-layer networks pose and propose developing centralized coordination systems.

Most of the work conducted until now has focused on providing tools and mechanisms for allowing dynamic transport layer reconfiguration. However, there is currently a deficiency in mechanisms that facilitate the multi-layer coordination of IP transit traffic offload actions, as well as an integral approach for automating reconfigurations necessary in the IP layer.

Although there are significant advances in providing transport technologies for optimizing device configuration, there are still some problems for configuring IP networks:
- Despite the fact that there are algorithms capable of calculating multi-layer routes, taking into account both the IP and the transport layers, there are no mechanisms for automatically starting up new IP connections automatically from a management system.
- The current definitions of the UIT-T, IETF and OIF standards related to the automatic switching of transport networks provide solutions for automating the dynamic provisioning of transport connections of IP nodes. This solves for the transport layer one of the problems associated with IP traffic offload. The proposed signaling mechanisms allow the IP layer to provide new IP links to the transport layer. However, these protocols do not allow configuring these IP links in the IP layer for efficiently sending traffic through them.
- The way of interacting with the different network devices is not standardized, so any management methodology and system must consider interaction with specific equipment for suitably configuring all the parameters.

### Description of the Invention

To achieve the objectives and prevent the aforementioned drawbacks, the invention consists of a method and a system for coordinating and automating IP traffic offload processes in transport technology, minimizing the operational problems associated with IP and transport layer configuration.

The present invention proposes a new structure made up of two main components:
- The IP traffic offload management module, which is a new element using new dynamic technologies of transport networks for new transport link establishment (with a series of specific requirements) between IP routers. Therefore, the management module handles network status information (link load, traffic matrix, etc.) to decide whether new transport level links (bypass) must be created. If a new link must be established, the management module is capable of interacting with the IP nodes for establishing the new connections. All these processes are performed within the management module automatically. It also manages network events, calculates the new virtual topologies and activates the configuration of said topologies by means of interaction with the different nodes.
- A new module which is integrated in each of the conventional IP nodes, called routing module, offering a new interface for the management module. This module will be responsible for: creating the transport links and configuring the IP parameters of said links correctly (it defines routing protocols through the new interfaces). If offers a common interface, which is also specified in the present invention, with the management module and encapsulates the specific details of the interaction between the IP and transport layers by means of a new interface (called Ca).

Therefore, the present invention will consist of:
- A system, integrated by the management module and at least one routing module, with different components integrating the monitoring, warning processing and interface management capabilities with the network equipment for network status coordination and new virtual link establishment.
- The interfaces between the main components of the invention.
- The event warning or notification management process and the decision as to IP link creation and configuration.

The management module can interact with the IP nodes or any other system of the network, in a preferred embodiment it will be a system with SNMP (Simple Network Management Protocol) notifications for the purpose of detecting the different events that can be discovered in the network.

The main functionalities and components of the management module are the following:
- The nucleus module: this component comprises means for processing network status and warning notification information and deciding on the new links that must be created or eliminated if the traffic load decreases.
- The timing module: allows activating a periodic network status check and launching a process (executed by the nucleus module) for calculating and configuring the most suitable topology in the IP layer.
- The administration module: comprises an interface which allows the network administrator to configure the dynamic IP offload thresholds and also allows viewing the changes that are being made in the network topology. This administration module provides a graphical interface for the network administrator.
- Monitoring module(s): this is the module for obtaining network status information. There could be different embodiments of this module: it can be connected to the general network failure monitoring/management network and obtain information about the network status and/or it can directly access IP routers for obtaining information about the link load, traffic matrices, network topologies, using to that end the SNMP protocol.

The implementation of this component will depend on the specific network technology and the available management tools. It could be implemented as a group of monitoring modules which are administered by a master monitoring module offering a unified interface for the nucleus module and coordinating the remaining monitoring modules that are part of the management module. In any case, if the remaining modules are configured to report network events to an IP and a specific port through the SNMP protocol, the application of this module will be the same because all the network devices are in a position to report the events via SNMP notifications.
- The routing module is the module responsible for new link creation and IP layer configuration such that these new links can be used for transporting data. The following functions are carried out by this module:
- Establishing the new link by means of interaction with the transport nodes through, for example, UNIs or protocols defined by IETF.
- Configuring IP addresses used for the created IP link and configuring the routing protocols and MPLS tunnels.

The objective of this module is to provide encapsulation of the operations performed with regard to the management module such that there is a single interface for creating and configuring the new links.

The routing module will be aware of the model of interaction between the transport layers and the IP layer (peer model, UNI model, etc.) and will configure the new link correctly.

The following interfaces are also part of the proposed system:
- Cs interface, internal interface of the management module: This interface allows the timing module to ask the nucleus module to check the network status and recalculate the most suitable network topology which allows optimizing the IP layer. On the other hand, the nucleus module allows the configuration of the periods that are established for performing network optimization. Therefore, the following messages are exchanged through this interface:
   - periodic optimization request: this request is sent by the timing module to the nucleus module for performing a periodic optimization process.
   - periodic optimization response: this response is sent by the nucleus module to the timing module for providing information about the optimization process result (done, delayed or cancelled) and it also contains a new timer.
   - periodic configuration request: this request is sent by the nucleus module to the timing module for defining the new network optimization launch period. If the value is set at "0", this means that network optimizations are not allowed.
   - periodic configuration response: this response is sent by the timing module to the nucleus module for notifying that the period configuration has been performed correctly.
- Cad interface, internal interface of the management module: This interface allows the administration module to configure the behavior of the management module and also to receive information about the created or eliminated links dynamically. Therefore, the following messages are defined for this interface:
   - new configuration request: allows the administration module to define the algorithm parameters which are executed by the nucleus module. These parameters include information about the optimal threshold for activating the new link creation, for example, the link load exceeds 50%, the operating mode, if the management module will carry out periodic network optimizations provoked by the timing module, periodic optimizations of the types of warnings that will be handled, etc.
   - new configuration response: this response is sent by the nucleus module to the administration module for notifying the new configuration result.
   - new topology request: this allows the administration module to define the new topology, IP nodes and links, that must be configured.
   - new topology response: this response is sent by the nucleus module to the administration module for notifying the new topology configuration result.
   - network status notification: this message is sent by the nucleus module to the administration module for providing information about the network status that may be useful for the network administrator.
   - network topology modification notification: this message is sent by the nucleus module to the administration module for notifying that a change in the topology has been configured. It includes a description about this change.
- Cm interface, internal interface of the management module: This interface defines the interaction between the nucleus module and the monitoring module. The following commands are defined:
   - network topology request: the nucleus module asks the monitoring components for information about the network topology for the purpose of having an IP network layer graph. This request is made at least during the management module start-up phase for minimizing its configuration.
   - network topology response: the monitoring module responsible for interacting with the IP nodes for obtaining the network topology (according to IGP and EGP routing protocols) returns the network graph identifying the types of nodes (access, transit and interconnection nodes).
   - network status request: this request is sent by the nucleus module to the monitoring module for obtaining information about the network status (topology and traffic matrix). This request is made only if the periodic network optimization status is enabled.
   - network status response: this is the response sent by the monitoring module to the nucleus module for providing information about the topology and traffic matrix. This traffic matrix can be obtained using different methodologies: by means monitoring traffic in LSPs (Label Switched Paths) established by the access routers, by means of correlating the global load with the routing information of the nodes using specific algorithms, etc.
   - warning configuration request: this request is sent by the nucleus module to the monitoring module for configuring the warnings which must be sent to the nucleus module. This configuration includes information about link load threshold (different types of links can have different thresholds), link failure notifications, dynamic routing changes, etc. It also includes information about the nodes that the monitoring module must supervise.
   - warning configuration responses: this response is sent by the monitoring module to the nucleus module for notifying that the warning notification configuration has been duly performed.
   - new warning notification: the monitoring module notifies the nucleus module of a new warning. This notification includes the description of the warning, and the nodes affected by the failure (for example a transit router has completely crashed, the interface of a transit router has crashed, the link load threshold has been exceeded, etc.) This notification will make the nucleus module recalculate the optimal topology that can best handle this network event.
- Ca interface, interface between the management module and the routing modules: This interface allows the nucleus module to ask the routing modules to create or eliminate a link. The following commands are defined:
   - link creation request: this request is sent by the nucleus module to the routing modules for the creation of a new link. It includes the IP addresses for managing the nodes which must be connected by means of the new link. It also includes the bandwidth of the new link (through this route and perhaps through an alternative route in the event that RSVP may be activated) and the types of nodes which must be connected (access-access, access-transit, transit-transit, transit-interconnection and access-interconnection), because the new interface configuration could be different depending on the types of nodes that are connected. In other words, if a transit-transit node link must be configured, the metrics of the new link can be minimal and the LDP (Label Distribution Path) protocol can be activated for establishing the LSP at the IP/MPLS level, whereas if it involves configuring an access-interconnection link, the metrics of the IGP (Interior Gateway Protocol) routing protocol of this new link will be high and RSVP will be used for LSP installation at the IP/MPLS level to prevent using interconnection nodes as transit nodes for the switching traffic within the domain.
   - link establishment response: provides information about the new link configuration result.
   - Link elimination request: this request is used to eliminate a link. It includes the IP address information of the affected nodes and the bandwidth that must be eliminated. For example, if 2 ports are dedicated, perhaps the request only entails the elimination of a single port out of the two.
   - Link elimination response: provides information about the link elimination result.

It is important to stress that interaction with the IP layer assumes that interaction between the IP layer and the transport layer is based on peer, augmented or overlapping models. Therefore, new link creation in the transport layer can be activated from the IP router itself as a result of the availability of the UNI interface or a common control plane. The routing modules are therefore aware of the available network configuration and the IP links are configured considering these parameters.

In summary, when a deployed IP network is previously provided the system of the present invention is characterized in that it comprises the following modules:
- a management module comprising means for creating links between IP nodes of the IP network through interaction with transport nodes of the transport layer, means for managing said network status information, means for configuring IP addresses of the nodes between which the links are created and means for establishing routing protocols and MPLS tunnels in the IP network by means of a common interface with routing modules integrated into the IP nodes;
- a routing module integrated into each of the IP network nodes, comprising means for providing transport connections between said nodes by means of user-network interfaces and conventional protocols and configuring IP parameters of said transport connections, and means for providing routing protocols and MPLS tunnels to said connections by means of a common interface with the management module; and,
- a communication interface between the management module and the routing modules.

Said transport network will be selected from an electric transport network and an optical transport network and interaction between the IP network and the transport network will be based on integration models selected from overlapping models, integrated models and augmented models.

The management module in a preferred embodiment comprises:
- a nucleus module comprising means for coordinating processes that are executed in the management module, for processing network status information, for managing new warning notifications and for deciding on creating and eliminating links;
- an administration module which comprises providing a graphical interface, which specifies a new topology, to a network administrator, whereby the administrator configures the high capacity traffic offload thresholds, the operating mode of the management module and views the changes in said network topology;
- at least one monitoring module which comprises monitoring the network elements and providing the nucleus module with an interface through which it can obtain network status information through an SNMP protocol, where said network status information includes information about link load, traffic matrices and network topology;
- a timing module starting network optimization processes periodically by means of timers which, upon expiring, send requests to the nucleus module which is responsible for managing said network optimization processes;
- a Cad interface implemented in the management module, connecting said management module with the administration module which comprises allowing the administration module to configure the management module, specify a new topology and receive information about which links have been created or eliminated;
- a Cm interface implemented in the management module, connecting said management module with the monitoring module which comprises defining network topology and status by means of the monitoring module at the request of the nucleus module, and;
- a Cs interface implemented in the management module, connecting said management module with the timing module, the timing module which comprises making requests to the nucleus module to check the network status and calculate the network topology optimizing the IP layer;

The communication interface between the management module and the routing modules comprises the following commands:
• link creation request, sent by the nucleus module to the routing modules, comprising the IP address of the nodes involved, the link bandwidth and the type of nodes that are linked;
• link creation response, sent from the routing modules to the nucleus module, comprising information about the new link configuration result;
• link elimination request, sent from the nucleus module to the routing modules, comprising the IP address of the nodes involved and the bandwidth that must be eliminated, and;
• link elimination response, comprising information about the link elimination result.

The types of IP network nodes which are linked by means of transport connections are selected from:
• access nodes with access nodes;
• access nodes with transit nodes;
• transit nodes with transit nodes;
• transit nodes with interconnection nodes, and;
• access nodes with interconnection nodes,

The Cs interface comprises the following commands:
• periodic optimization request, sent by the timing module to the nucleus module to start a dynamic network optimization process once the timer stored in said timing module has expired;
• periodic optimization response, sent by the nucleus module to the timing module, said response being selected from optimization performed, optimization postponed and optimization aborted and said response additionally containing a new timer;
• period configuration request, sent by the nucleus module to the timing module, where the value of the period with which the periodic optimization request is executed is defined, and;
• period configuration response, sent by the timing module to the nucleus module, where it is notified that the period configuration has been performed.

The Cad interface comprises the following commands:
- new configuration request, sent from the administration module to the nucleus module comprising the new network configuration parameters which are selected from the link load threshold above which a new link and the system operating mode are created and where it is specified whether the system performs periodic optimizations and the period between them;
- new configuration response, sent from the nucleus module to the administration module notifying the new configuration result;
- new topology request, sent from the administration module to the nucleus module defining the IP nodes and links which must be configured;
- new topology response, sent from the nucleus module to the module administration comprising a new topology result notification;
- network status notification, sent from the nucleus module to the administration module comprising information about network status, and;
- topology modification notification, sent from the nucleus module to the administration module comprising confirmation that the modification has been configured and a detailed description of said modification.

The Cm interface comprises the following commands:
- network topology request, sent from the nucleus module to the monitoring module during at least the initial management module configuration process comprising a request to send an IP network topology graph;
- network topology response, sent from the monitoring module to the nucleus module, comprising the IP network topology graph identifying the types of nodes which are selected from access nodes, transit nodes and interconnection nodes;
- network status request, sent from the nucleus module to the monitoring module, requesting information about the network topology and network traffic matrix;
- network status response, sent from the monitoring module to the nucleus module, providing the mentioned network topology and traffic matrix;
- warning configuration request, sent from the nucleus module to the monitoring module comprising configuring the warnings that the nucleus module receives, said request including a list of the nodes that the monitoring module must monitor, information about link load thresholds, link failure notifications and routing alternation;
- warning configuration response, sent from the monitoring module to the nucleus module which comprises notifying that the warning configuration has been performed, and;
- new warning notification, sent from the monitoring module to the nucleus module which comprises a description of the warning received, of the nodes involved in said warning and comprising executing an optimal topology calculation process in the nucleus module if the periodic optimization mode is activated.

The nucleus module further comprises:
- means for establishing offload thresholds and a network optimization period;
- means for configuring a network topology by means of a planning tool;
- means for processing network and warning notification status information, and;
- means for managing information received from the monitoring modules, and;
- means for informing the routing modules that new links must be created or eliminated.

The administration module comprises:
- means for viewing network status information;
- means for configuring the module working parameters, and;
- means for providing a new network topology to the management module by means of a file where said new topology is stored.

The monitoring module comprises:
- means for monitoring IP network topology by means of a monitoring mode selected from:
   - a level 2 IS-IS router monitoring mode by means of accessing the IS-IS link status database in which the links between IS-IS routers are described and which contain network topology information, and;
   - a level 2 IS-IS router monitoring mode by means of an element integrated into the network which captures the IS-IS signaling link status packets containing network topology information;
- means for monitoring the network status and traffic matrix in the network nucleus by means of a monitoring mode selected from:
   - a mode comprising monitoring the load in the links via SNMP to access the MIB (Management Information Base) router and interfere with the traffic matrix;
   - a mode comprising obtaining traffic information by means of NetFlow information, NetFlow being a network protocol for accessing traffic information, and;
   - a mode comprising obtaining traffic information by means of filters implemented in the routers for monitoring traffic information and storing said information in files in the routers which are accessible via SNMP;
- means for subscribing to network warnings to implement new topology reconfiguration in the event of new network warnings.

The monitoring module additionally comprises an implementation mode selected from:
- a mode which comprises connecting the monitoring module with a network management module integrated into the network;
- a mode which comprises connecting the monitoring module with a network failure management module integrated into the network;
- a mode which comprises connecting the monitoring module directly with the network IP nodes by means of SNMP protocols, and;
- any combination of the foregoing.

In a preferred embodiment, when the monitoring module receives warnings from more than one source, a monitoring module for each of the warning sources and a master monitoring module managing the monitoring modules and providing a common interface for the nucleus module to perform communication are implemented.

The present invention further comprises a method for coordinating and automating processes of IP traffic offload in transport technology. To carry out said method and as previously mentioned, there must be a deployed IP network over a transport network selected from an electrical and optical transport network. The interaction between the IP network and the transport network will be based on integration models selected from overlapping, integrated and augmented models. The method therefore comprises the following phases:
- configuring the management module through the network administrator by means of sending initialization parameters to said management module;
- the network administrator configuring the network topology by means of a file with a network topology which is stored in said network administrator externally and manually;
- the management module configuring the network topology by means of the interaction of the management module with the IP network nodes where the routing modules responsible for requesting the resources from the transport network (optical or electrical) using signaling for creating new links and subsequently responsible for configuring said links at the IP level are integrated, and;
- the management module creating transport connections and configuring said connections at the IP level when network warnings are detected at the IP level by means of user-network interfaces and conventional protocols.

After the IP level transport link creation and configuration phase, the method comprises a network monitoring and periodic optimization phase by means of the management module, provided that said functionality is implemented during the management module configuration phase. This phase is performed by means of sending a period configuration request from the nucleus module to the timing module using the Cs interface.

The IP management module configuration phase additionally comprises the following steps:
- sending a configuration request with the timing parameters and warnings to be managed from the administration module to the nucleus module by means of the Cad interface generating a first process in said nucleus module;
- sending a period configuration request from the nucleus module to the timing module by means of the Cs interface while executing the first process specifying a period for performing periodic optimizations;
- receiving said period in the timing module and said module executing a periodic network resource optimization process when the received period is other than zero;
- sending a warning configuration request from the nucleus module to the monitoring module by means of the Cm interface, comprising configuring the network warnings generating a third process;
- sending a response to the period configuration request from the timing module to the nucleus module by means of the Cs interface once the second process has ended;
- sending a response to the warning configuration request from the monitoring module to the nucleus module by means of the Cm interface once the third process has ended, and;
- sending a response to the new configuration request from the nucleus module to the administration module by means of the Cad interface once the first process has ended.

The network topology configuration phase in turn comprises the following steps:
- sending a network topology from a network administrator to the administration module;
- sending a new topology request from the administration module to the nucleus module by means of the Cad interface generating a first process;
- executing said process in the nucleus module which identifies which IP nodes must be reconfigured;
- sending a link creation request from the nucleus module to each of the routing modules involved by means of the interface communicating them, executing a transport level link creation and IP level configuration process for each of the routing modules integrated into the IP nodes;
- sending a response from each of the routing modules in which the processes have been executed to the nucleus module once each of the processes has ended, and;
- sending a new topology response from the nucleus module to the administration module by means of the Cad interface once the first process has ended.

The new transport link creation and configuration phase of the method is characterized in that when the monitoring module enables a port for receiving warnings and a warning is received, it comprises the following steps:
- sending a new warning notification to the nucleus module from the monitoring module by means of the Cm interface;
- executing a process in the nucleus module that calculates the new links between the corresponding nodes optimizing the IP level use, and the nucleus module additionally sends a network status request from the monitoring module by means of the Cm interface for checking the network status;
- configuring the transport connections and the use thereof at the IP level by means of each of the routing modules involved, and;
- sending a topology modification notification from the nucleus module to the administration module by means of the Cad interface.

The phase of performing periodic network monitoring and optimizations comprises the following phases:
- executing a timer in the timing module;
- sending a network optimization request from the timing module to the nucleus module by means of the Cs interface once said timer expires;
- sending a network status request from the nucleus module to the monitoring module by means of the Cm interface;
- obtaining the network topology and a traffic matrix in the monitoring module;
- calculating and configuring the transport connections necessary depending on the desired IP network topology and the traffic estimation matrix by means of sending link creation requests to the routing modules of the IP nodes involved by means of the interface communicating the nucleus module with the routing modules;
- sending link creation responses to the nucleus module from each of the routing modules by means of the interface communicating them and generating the links;
- sending a network optimization response from the nucleus module to the timing module by means of the Cs interface once the last link establishment response has been received, which executes another timer, and;
- sending a topology modification notification from the nucleus module to the administration module by means of the Cad interface.

On the other hand, when the routing module receives a link creation request sent by the nucleus module for creating and configuring a new link the following phases are executed:
- requesting a physical interface, for example an SDH (Synchronous Digital Hierarchy) connection, from the transport network depending on the type of network transport used;
- configuring said physical interface by means of assigning a weight, enabling a routing protocol and creating a tunnel by means of RSVP-TE or LDP technology, and;
- selecting the protocols corresponding to the routers used.

Through the SNMP protocol, the monitoring module obtains the network status information by means of an access selected from:
- access to a general network failure monitoring/management network, and;
- direct access to the IP routers.

The traffic matrix is obtained by means of a method selected from:
- monitoring network traffic by means of Label Switched Path (LSP) in the access routers, and;
- inferring said matrix through the global network link load and the routing information by means of conventional algorithms

The new warning notifications are sent when an event occurs, said event being selected from:
- a transit router breaks;
- the transit router interface crashes, and;
- the link load threshold of a link is exceeded.

The present invention therefore has the following advantages with respect to the state of the art.
- Due to its modular design, new features (for example, new advanced monitoring capabilities) can be incorporated without having a major impact on the architecture or on the general behavior of the system. Also, as a result of the specification of the routing module as a new component that is integrated into conventional IP nodes, the modules which must be adapted to the specific network features are minimized.
- Finally, the proposed processes will serve as a basis for the application of any case of use associated with changes in virtual topology, whether provoked by the administrator, by network events or by means of periodic monitoring. It is important to take into account that there is no device/architecture capable of applying this management mechanism, i.e., IP traffic offload.
- The management module is aware of the network status for tracking traffic changes and also supporting the reaction when a network failure occurs.
- The management module allows new IP link configuration as a result of the interaction with the routing module responsible for the new interface configurations: assigning IP addresses to the new interfaces and configuring the routing IP and eventual control plane protocols on the new transport topology dynamically, for the purpose of preventing service interruptions.
- The mechanisms (RSVP configuration and suitable routing metrics within the domain) that are applied in the routing modules for carrying out IP layer configuration prevents using unwanted routes and allows balancing the load between the different routes for the purpose of allowing optimal use of network resources.
- The proposed system can be used by the network administrator for configuring a topology such as that described in the invention. This would allow using a single management system for the IP and transport layer provision.

### Brief Description of the Drawings

Figure 1 shows the management module block diagram.
Figure 2 shows the configuration phase flow chart.
Figure 3 shows the new topology configuration phase flow chart.
Figure 4 shows the warning management phase flow chart.
Figure 5 shows the periodic optimization phase flow chart.

### Embodiment of the Invention

An illustrative and non-limiting description of an embodiment of the invention is provided below making reference to the numbering used in the drawings.

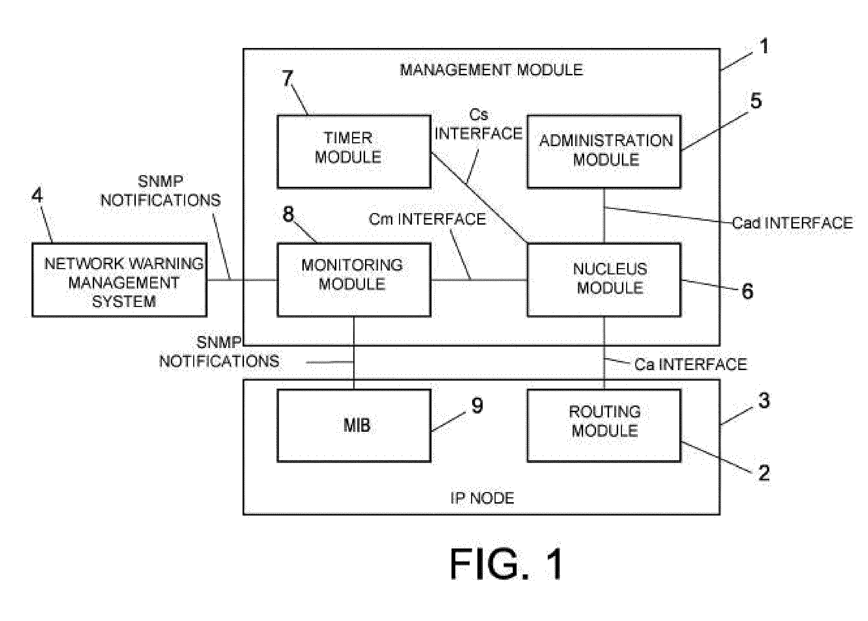

Figure 1 shows the block diagram of the system comprising a management module (1), a routing module (2) integrated into the network IP nodes (3) and the network warning management system (4). Said management module (1) in turn comprises an administration module (5), a nucleus module (6), a timing module (7) and a monitoring module (8).

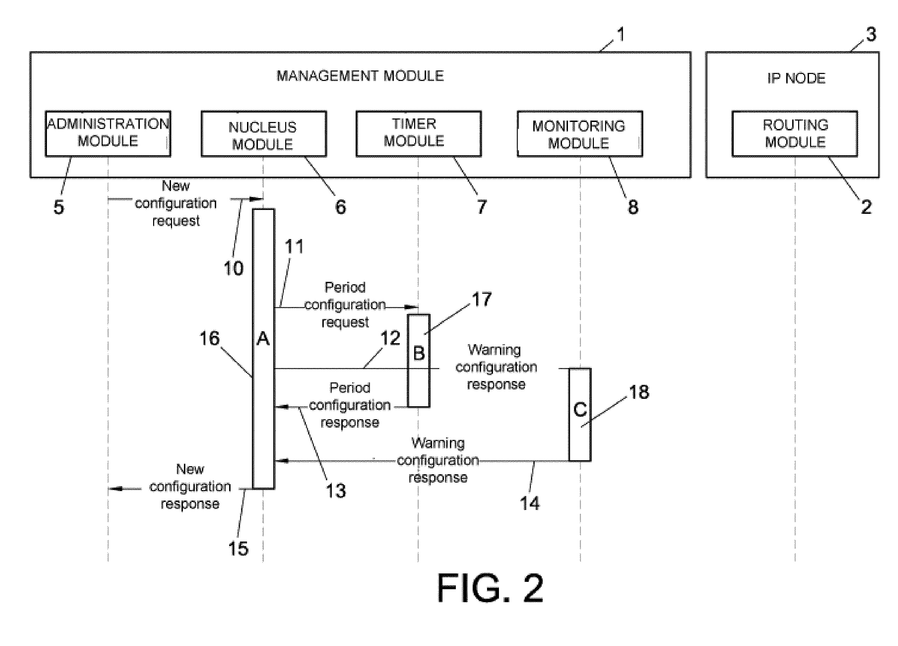

The management module (1) is configured through the administration module (5), as shown in Figure 2. Said figure shows the sequence diagram defining the interaction between the different components when the network administrator provides a new configuration through the administration interface to the administration module (5). The administration module (5) sends a new configuration request (10) to the nucleus module (6). This makes the nucleus module (6) execute process A (16) which is responsible for performing the following tasks:
o configuring the timing module (7): the nucleus module (6) will send the period configuration request (11) to the timing module. This request will provoke executing process B (17) in the timing module, which will configure the wait time for the dynamic reconfiguration according to the value received (the administrator module will have previously enabled the periodic optimization); if this period is set at "0" the timing module will not be enabled. When said process B ends, the timing module sends a period configuration response (13) to the nucleus module,
o Configuring the monitoring module (8) for subscribing to different network warnings. This is done as a result of the warning configuration requests (12) which is sent from the nucleus module (6) and starts process C (18) at the end of which the warning configuration response (14) is sent.

Once the configuration responses are received from the timing module (7) and the monitoring module (8), the nucleus module (6) will send the new configuration response (15) to the administration module (5).

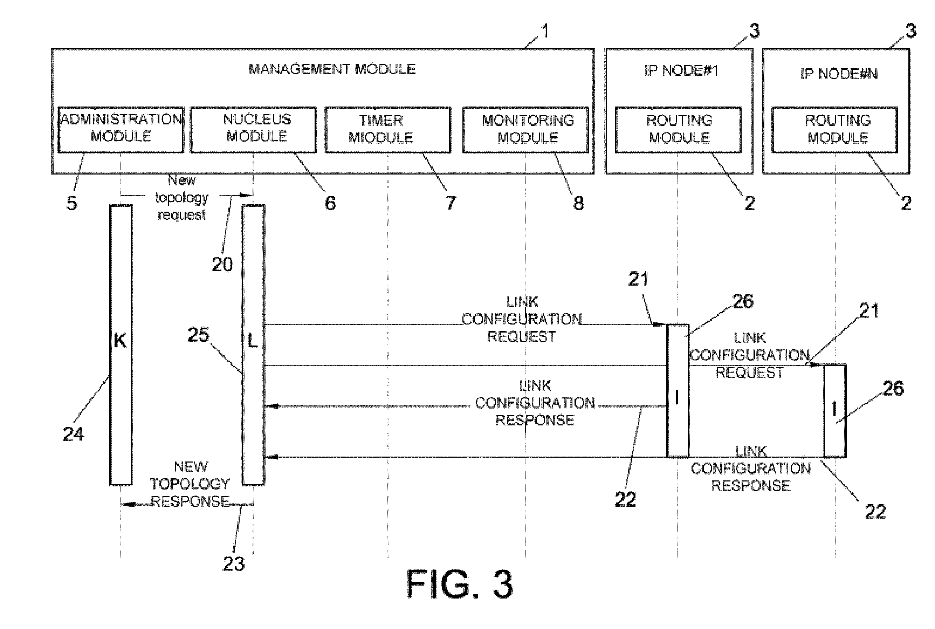

Figure 3 shows the sequence diagram defining the interaction between the different components when the network administrator specifies a new IP network topology by means of the administration interface (which implements a graphical interface). When the administrator module receives the new topology that must be configured according to the network administrator planning instruments from the network administrator, the following actions are triggered:
- The administration module (5) sends a new topology request (20) to the nucleus module (6) and executes process K (24).
- The nucleus module (6) executes process L (25) which identifies which IP nodes must be reconfigured.
- Once the new links are identified, they are configured using the routing modules (2) implemented in the IP nodes by means of sending link configuration requests (21) to the nodes involved from the nucleus module executing process I (26).
- Finally, once the link configuration responses (22) are received, the new result will be notified to the administration module by means of sending the new topology response (23).

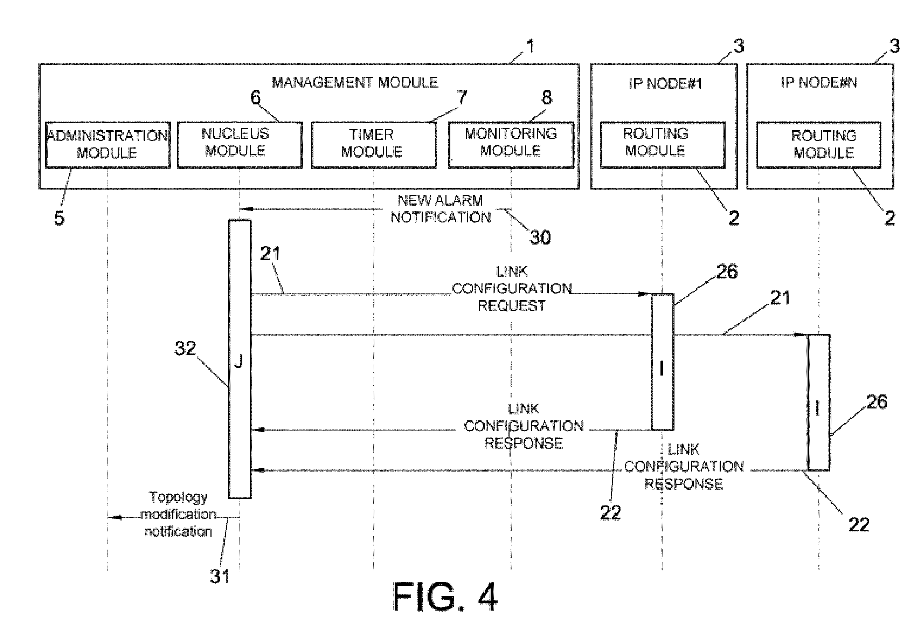

Figure 4 shows the sequence diagram defining the interaction between the different components when warnings are managed in the monitoring module (8), said monitoring module having previously opened a listening port for receiving notifications. Therefore, if a warning is detected in the network, the event is received by the monitoring module.

When the monitoring module (8) receives a warning notification (by means of an SNMP capture notification from an IP node through the managed information bases (9) implemented therein or from the network warning management system (4)), the following steps take place:
- The monitoring module (8) sends a new warning notification (30) to the nucleus module (6).
- The nucleus module executes a process J (32), the purpose of which is to calculate alternative routes for solving the incident recorded in the new warning. This method can optionally include a network status check using a counter. Once the new links are calculated, they are configured using the routing modules implemented in the IP nodes by means of sending link configuration requests (21) to the nodes involved from the nucleus module executing process I (26).
- Finally, once the link configuration responses (22) are received, the new result will be notified to the administration module (5) by means of sending the topology modification notification (31).

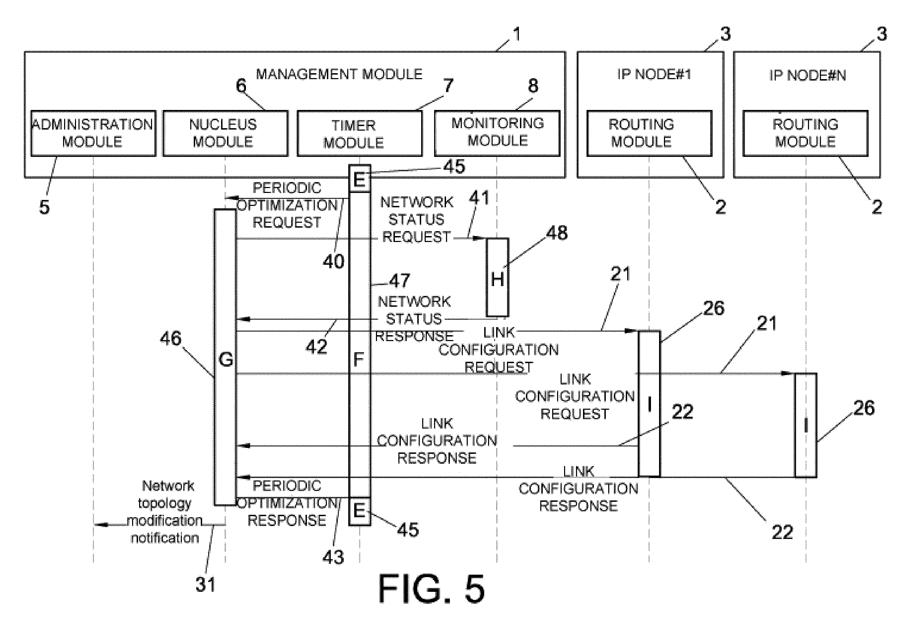

Figure 5 shows the sequence diagram defining the interaction between the different components for performing periodic network optimization topology. When executing a network optimization process, the following phases take place:
- The timing module (7) has a process E (45) being executed. This process is a timer which activates the network optimization topology, process F (47), when it expires. Therefore, the timing module sends a network optimization request (40) to the nucleus module (6) and waits for the response, or in other words, until process F ends.
- When the nucleus module (6) receives the network optimization request (40), process G (46) starts, comprising the following actions:
   o It sends a network status request (41) to the monitoring module (8) which executes process H (48) in said module and results in sending the network status response (42) containing the network topology and a traffic matrix estimation.
   o Depending on the network status information received, the nucleus module calculates the optimal topology and it is configured by means of new link creation. Therefore, it has to interact with all the IP nodes which must be configured for establishing the new topology. To do this, it uses the link creation request (21) described in Ca interface executing process I (26) in each of the routing modules (2) involved, which are responsible for creating the new links and configuring them. Once the new links have been created, the routing modules involved will send a link creation response (22) to the nucleus module. When the last of the responses is received, the nucleus module (6) will send a periodic optimization response (43) to the timing module (7) and the timer will restart (process E (45)).
   o Once the new topology configuration has been carried out, the nucleus module sends a network topology modification notification (31) to the administration module (5).

## Claims

1. A system for managing high capacity traffic offload in an IP network nucleus over a transport network, comprising a previously deployed IP network and said transport network being selected from an electric transport network and an optical transport network, and where the interaction between the IP network and the transport network is based on integration models selected from overlapping models, integrated models and augmented models, **characterized in that** it comprises the following modules:
- a management module comprising means for creating links between IP nodes of the IP network through interaction with transport nodes of the transport layer, means for managing said network status information, means for configuring IP addresses of the nodes between which the links are created and means for establishing routing protocols and MPLS tunnels in the IP network by means of a common interface with routing modules integrated into the IP nodes;
- a routing module integrated into each of the IP network nodes, comprising means for providing transport connections between said nodes by means of user-network interfaces and conventional protocols and configuring IP parameters of said transport connections, and means for providing routing protocols and MPLS tunnels to said connections by means of a common interface with the management module; and,
- a communication interface between the management module and the routing modules.

2. The system for managing high capacity traffic offload in an IP network nucleus according to claim 1, **characterized in that** the management module additionally comprises:
• a nucleus module comprising means for coordinating processes that are executed in the management module, means for processing network status information, means for managing new warning notifications and means for deciding on creating and eliminating links;
• an administration module which comprises providing a graphical interface, which specifies a new topology, to a network administrator, whereby the administrator configures the high capacity traffic offload thresholds, the operating mode of the management module and views the changes in said network topology;
• at least one monitoring module which comprises monitoring the network elements and providing the nucleus module with an interface through which it can obtain network status information through an SNMP protocol, where said network status information includes information about link load, traffic matrices and network topology;
• a timing module periodically starting network optimization processes by means of timers which, upon expiring, send requests to the nucleus module which is responsible for managing said network optimization processes;
• a Cad interface implemented in the management module, connecting said management module with the administration module which comprises allowing the administration module to configure the management module, specify a new topology and receive information about which links have been created or eliminated;
• a Cm interface implemented in the management module, connecting said management module with the monitoring module which comprises defining the network topology and status by means of the monitoring module at the request of the nucleus module, and;
• a Cs interface implemented in the management module, connecting said management module with the timing module, the timing module which comprises making requests to the nucleus module to check the network status and calculate the network topology optimizing the IP layer;

3. The system for managing high capacity traffic offload in an IP network nucleus according to claim 1, where the communication interface between the management module and the routing modules comprises the following commands:
• link creation request, sent by the nucleus module to the routing modules, comprising the IP address of the nodes involved, the link bandwidth and the type of nodes that are linked;
• link creation response, sent from the routing modules to the nucleus module, comprising information about the new link configuration result;
• link elimination request, sent from the nucleus module to the routing modules, comprising the IP address of the nodes involved and the bandwidth that must be eliminated, and;
• link elimination response, comprising information about the link elimination result.

4. The system for managing high capacity traffic offload in an IP network nucleus according to claim 1, **characterized in that** the types of IP network nodes which are linked by means of transport connections are selected from:
• access nodes with access nodes;
• access nodes with transit nodes;
• transit nodes with transit nodes;
• transit nodes with interconnection nodes, and;
• access nodes with interconnection nodes.

5. The system for managing high capacity traffic offload in an IP network nucleus according to claim 3, where the timing module stores a timer, **characterized in that** the Cs interface comprises the following commands:
• periodic optimization request, sent by the timing module to the nucleus module to start a dynamic network optimization process once the timer stored in said timing module has expired;
• periodic optimization response, sent by the nucleus module to the timing module, said response being selected from optimization performed, optimization postponed and optimization aborted and said response additionally containing a new timer;
• period configuration request, sent by the nucleus module to the timing module, where the value of the period with which the periodic optimization request is executed is defined, and;
• period configuration response, sent by the timing module to the nucleus module, where it is notified that the period configuration has been performed.

6. The system for managing high capacity traffic offload in an IP network nucleus according to claim 3, where the Cad interface comprises the following commands:
• new configuration request, sent from the administration module to the nucleus module comprising the new network configuration parameters which are selected from the link load threshold above which a new link and the system operating mode are created and where it is specified whether the system performs periodic optimizations and the period between them;
• new configuration response, sent from the nucleus module to the administration module notifying the new configuration result;
• new topology request, sent from the administration module to the nucleus module defining the IP nodes and links which must be configured;
• new topology response, sent from the nucleus module to the module administration comprising a new topology result notification;
• network status notification, sent from the nucleus module to the administration module comprising information about the network status, and;
• topology modification notification, sent from the nucleus module to the administration module comprising confirmation that the modification has been configured and a detailed description of said modification.

7. The system for managing high capacity traffic offload in an IP network nucleus according to claim 3, where the Cm interface comprises the following commands:
• network topology request, sent from the nucleus module to the monitoring module during at least the initial management module configuration process comprising a request to send an IP network topology graph;
• network topology response, sent from the monitoring module to the nucleus module, comprising the IP network topology graph identifying the types of nodes which are selected from access nodes, transit nodes and interconnection nodes;
• network status request, sent from the nucleus module to the monitoring module, requesting information about the network topology and network traffic matrix;
• network status response, sent from the monitoring module to the nucleus module, providing the mentioned network topology and traffic matrix;
• warning configuration request, sent from the nucleus module to the monitoring module comprising configuring the warnings that the nucleus module receives, said request including a list of the nodes that the monitoring module must monitor, information about link load thresholds, link failure notifications and routing alternation;
• warning configuration response, sent from the monitoring module to the nucleus module which comprises notifying that the warning configuration has been performed, and;
• new warning notification, sent from the monitoring module to the nucleus module comprising a description of the warning received, of the nodes involved in said warning and which comprises executing an optimal topology calculation process in the nucleus module if the periodic optimization mode is activated.

8. The system for managing high capacity traffic offload in an IP network nucleus according to claim 1, **characterized in that** the nucleus module comprises:
• means for establishing offload thresholds and a network optimization period;
• means for configuring a network topology by means of a planning tool;
• means for processing network and warning notification status information, and;
• means for managing information received from the monitoring modules, and;
• means for informing the routing modules that new links must be created or eliminated.

9. The system for managing high capacity traffic offload in an IP network nucleus according to claim 1, **characterized in that** the administration module comprises:
• means for viewing network status information;
• means for configuring the module working parameters, and;
• means for providing a new network topology to the management module by means of a file where said new topology is stored.

10. The system for managing high capacity traffic offload in an IP network nucleus according to claim 1, **characterized in that** the monitoring module comprises:
• means for monitoring IP network topology by means of a monitoring mode selected from:
- a level 2 IS-IS router monitoring mode by means of accessing the IS-IS link status database in which the links between IS-IS routers are described and which contain network topology information, and;
- a level 2 IS-IS router monitoring mode by means of an element integrated into the network which captures the IS-IS signaling link status packets containing network topology information;
• means for monitoring the network status and traffic matrix in the network nucleus by means of a monitoring mode selected from:
- a mode comprising monitoring the load in the links via SNMP to access the MIB router and interfere with the traffic matrix;
- a mode comprising obtaining traffic information by means of NetFlow information, NetFlow being a network protocol for accessing traffic information, and;
- a mode comprising obtaining traffic information by means of filters implemented in the routers for monitoring traffic information and storing said information in files in the routers which are accessible via SNMP;
• means for subscribing to network warnings to implement new topology reconfiguration in the event of new network warnings.

11. The system for managing high capacity traffic offload in an IP network nucleus according to claim 2, **characterized in that** the monitoring module comprises an implementation mode selected from:
• a mode which comprises connecting the monitoring module with a network management module integrated into the network;
• a mode which comprises connecting the monitoring module with a network failure management module integrated into the network;
• a mode which comprises connecting the monitoring module directly with the network IP nodes by means of SNMP protocols, and;
• any combination of the foregoing.

12. The system for managing high capacity traffic offload in an IP network nucleus according to claim 2, **characterized in that** when the monitoring module receives warnings from more than one source, a monitoring module for each of the warning sources and a master monitoring module managing the monitoring modules and providing a common interface for the nucleus module to perform communication are implemented.

13. A method for managing high capacity traffic offload in an IP network nucleus, comprising the system of claim 1 and 2, where a deployed IP network is previously available on a transport network selected from an electrical and optical transport network, and where the interaction between the IP network and the transport network is based on integration models selected from overlapping, integrated and augmented models, **characterized in that** it comprises the following phases:
- configuring the management module through the network administrator by means of sending initialization parameters to said management module;
- the network administrator configuring the network topology by means of a file with a network topology which is stored in said network administrator externally and manually;
- the management module configuring the network topology by means of the interaction of the management module with the IP network nodes where the routing modules responsible for requesting the resources from the transport network (optical or electrical) using signaling for creating new links and subsequently responsible for configuring said links at the IP level are integrated, and;
- the management module creating transport connections and configuring said connections at the IP level when network warnings are detected at the IP level by means of user-network interfaces and conventional protocols.

14. The method for managing high capacity traffic offload in an IP network nucleus according to claim 13, **characterized in that** after the IP level transport link creation and configuration phase, the method comprises a network monitoring and periodic optimization phase by means of the management module, provided that said functionality is implemented during the management module configuration phase, by means of sending a period configuration request from the nucleus module to the timing module using the Cs interface.

15. The method for managing high capacity traffic offload in an IP network nucleus according to claim 13, **characterized in that** the IP management module configuration phase comprises the following steps:
- sending a configuration request with the timing parameters and warnings to be managed from the administration module to the nucleus module by means of the Cad interface generating a first process in said nucleus module;
- sending a period configuration request from the nucleus module to the timing module by means of the Cs interface while executing the first process specifying a period for performing periodic optimizations;
- receiving said period in the timing module and said module executing a periodic network resource optimization process when the received period is other than zero;
- sending a warning configuration request from the nucleus module to the monitoring module by means of the Cm interface, comprising configuring the network warnings generating a third process;
- sending a response to the period configuration request from the timing module to the nucleus module by means of the Cs interface once the second process has ended;
- sending a response to the warning configuration request from the monitoring module to the nucleus module by means of the Cm interface once the third process has ended, and;
- sending a response to the new configuration request from the nucleus module to the administration module by means of the Cad interface once the first process has ended.

16. The method for managing high capacity traffic offload in an IP network nucleus according to claim 13, **characterized in that** the network topology configuration phase comprises the following steps:
- sending a network topology from a network administrator to the administration module;
- sending a new topology request from the administration module to the nucleus module by means of the Cad interface generating a first process;
- executing said process in the nucleus module which identifies which IP nodes must be reconfigured;
- sending a link creation request from the nucleus module to each of the routing modules involved by means of the interface communicating them, executing a transport level link creation and IP level configuration process for each of the routing modules integrated into the IP nodes;
- sending a response from each of the routing modules in which the processes have been executed to the nucleus module once each of the processes has ended, and;
- sending a new topology response from the nucleus module to the administration module by means of the Cad interface once the first process has ended.

17. The method for managing high capacity traffic offload in an IP network nucleus according to claim 13, where the monitoring module enables a port for receiving warnings, **characterized in that** in the new transport link creation and configuration phase and when a warning is received, it comprises the following steps:
- sending a new warning notification to the nucleus module from the monitoring module by means of the Cm interface;
- executing a process in the nucleus module that calculates the new links between the corresponding nodes;
- configuring the transport connections and the use thereof at the IP level by means of each of the routing modules involved, and;
- sending a topology modification notification from the nucleus module to the administration module by means of the Cad interface.

18. The method for managing high capacity traffic offload in an IP network nucleus according to claim 14, **characterized in that** the phase of performing periodic network monitoring and optimizations comprises the following phases:
- executing a timer in the timing module;
- sending a network optimization request from the timing module to the nucleus module by means of the Cs interface once said timer expires;
- sending a network status request from the nucleus module to the monitoring module by means of the Cm interface;
- obtaining the network topology and a traffic matrix in the monitoring module;
- calculating and configuring the transport connections necessary depending on the desired IP network topology and the traffic estimation matrix by means of sending link creation requests to the routing modules of the IP nodes involved by means of the interface communicating the nucleus module with the routing modules;
- sending link creation responses to the nucleus module from each of the routing modules by means of the interface communicating them and generating the links;
- sending a network optimization response from the nucleus module to the timing module by means of the Cs interface once the last link establishment response has been received, which executes another timer, and;
- sending a topology modification notification from the nucleus module to the administration module by means of the Cad interface.

19. The method for managing high capacity traffic offload in an IP network nucleus according to claim 17, **characterized in that** the phase of executing a process in the nucleus module that calculates the new links between the corresponding nodes optimizing the IP level use includes a network status check by means of sending a network status request from the nucleus module to the monitoring module by means of the Cm interface.

20. The method for managing high capacity traffic offload in an IP network nucleus according to claim 13, **characterized in that** when the routing module receives a link creation request sent by the nucleus module for creating and configuring a new link, the following phases are executed:
• requesting a physical interface, SDH connection, from the transport network, depending on the type of network transport used;
• configuring said physical interface by means of assigning a weight, enabling a routing protocol and creating a tunnel by means of RSVP-TE or LDP technology, and;
• selecting the protocols corresponding to the routers used.

21. The method for managing high capacity traffic offload in an IP network nucleus according to claim 14, **characterized in that** through the SNMP protocol, said monitoring module obtains the network status information by means of an access selected from:
• access to a general network failure monitoring/management network, and;
• direct access to the IP routers.

22. The method for managing high capacity traffic offload in an IP network nucleus according to claim 18, **characterized in that** said traffic matrix is obtained by means of a method selected from:
- monitoring network traffic by means of Label Switched Path (LSP) in the access routers, and;
- inferring said matrix through the global network link load and the routing information by means of conventional algorithms.

23. The method for managing high capacity traffic offload in an IP network nucleus according to claim 17, **characterized in that** the new warning notifications are sent when an event occurs, said event being selected from:
- a transit router breaks;
- the transit router interface crashes, and;
- the link load threshold of a link is exceeded.
